# EUROPÄISCHE PATENTSCHRIFT

(11) **EP 1 607 623 B1**
(45) Veröffentlichungstag und Bekanntmachung des Hinweises auf die Patenterteilung: **23.03.2011**
(21) Anmeldenummer: 05011578.1
(22) Anmeldetag: 30.05.2005
(51) Int. Cl.: F03D 1/06, F03D 11/00

(54) **Rotorblatt für eine Windenenergieanlage**
Rotor blade for wind turbine
Pale pour éolienne

(30) Priorität: 15.06.2004 DE 102004028917
(43) Veröffentlichungstag der Anmeldung: 21.12.2005
(73) Patentinhaber: NORDEX Energy GmbH, 22848 Norderstedt (DE)
(72) Erfinder: Rochholz, Hermann, Dr.-Ing., 22848 Norderstedt (DE)
(74) Vertreter: Hauck Patent- und Rechtsanwälte

(56) Entgegenhaltungen:
- DE-A1- 19 621 485
- JP-A- 2005 105 916
- US-A1- 2004 028 528

## Beschreibung

Die vorliegende Erfindung betrifft ein Rotorblatt für eine Windenergieanlage.

Rotorblätter moderner Windenergieanlagen besitzen in der Regel zwei Halbschalen, zwischen denen sich ein oder mehrere Hohlräume befinden. In den Hohlräumen sammelt sich in Folge von Kondensation oder direktem Eindringen Wasser, das aus Sicherheitsgründen abgeführt werden muß. Wenn dieses Wasser nicht abgeführt wird, besteht im Winter die Gefahr, daß das gefrorene Wasser das Rotorblatt beschädigt oder gar zerstört. Auch besteht die Gefahr, daß in Folge von Blitzschlag in dem Rotorblatt eine explosionsartige Verdampfung des Wassers auftritt, wodurch das Rotorblatt beschädigt oder zerstört werden kann.

Neben dem Wasser in dem Rotorblatt befinden sich im Inneren des Rotorblatts in der Regel auch Schmutz, Staub und abgelöste Kleinteile aus der Fertigung. Ebenso wie das Wasser werden diese Teile unter dem Einfluß der Zentrifugalkraft in dem Rotorblatt bewegt.

Aus WO 02/48546 A1 ist ein Blitzfänger bekannt, d er in einer Bohrung in der Blattspitze angeordnet ist. Blitzfänger und Bohrung bilden gemeinsam ein Entwässerungssystem für das Rotorblatt. Nachteilig an dieser Konstruktion ist jedoch, daß die Öffnung sich durch Schmutz und Kleinteile zusetzen kann.

Der Erfindung liegt die Aufgabe zugrunde, eine Entwässerung für ein Rotorblatt einer Windenergieanlage zu schaffen, die mit einfachen Mitteln dauerhaft eine wirksame Abfuhr von Wasser aus dem Rotorblatt sicherstellt.

Erfindungsgemäß wird die Aufgabe durch ein Rotorblatt mit den Merkmalen des Anspruchs 1 gelöst. Vorteilhafte Ausgestaltungen bilden die Gegenstände der Unteransprüche.

Das erfindungsgemäße Rotorblatt für eine Windenergieanlage besitzt mindestens einen Hohlraum, der an einer Außenwand des Rotorblatts angrenzt und über mindestens eine Entwässerungsbohrung mit der Außenseite verbunden ist. In dem Hohlraum ist ein wasserdurchlässiges Auffangelement, das Schmutzpartikel und Kleinteile auffängt, angeordnet derart, daß Wasser aus dem Hohlraum durch das Auffangelement zu der Entwässerungsbohrung gelangt. Das Auffangelement hält Staub, Schmutzpartikel und Kleinteile wirkungsvoll zurück, so daß sich die Entwässerungsbohrung durch diese nicht zusetzen kann. Vorzugsweise ist das Auffangelement als Netz, Sieb und/oder ein Gitter ausgebildet. Auch können Kombinationen solcher Auffangelemente hintereinander in dem Hohlraum angeordnet sein.

In einer bevorzugten Ausgestaltung ist die Entwässerungsbohrung im Bereich der Blattspitze des Rotorblatts vorgesehen. Es hat sich als besonders zweckmäßig herausgestellt, die Entwässerungsbohrung an dem freien Ende der Blattspitze anzuordnen, da hier das Wasser unter Einwirkung der Fliehkraft durch das Auffangelement gedrückt wird und aus der Entwässerungsbohrung austritt.

Das Auffangelement ist im wesentlichen flach ausgebildet und quer zur Blattlängsrichtung im Hohlraum angeordnet, wobei das Auffangelement den Hohlraum im gesalnten Querschnitt bedeckt, so daß sämtliches Wasser durch dieses tritt.

In einer besonders bevorzugten Ausgestaltung ist in der Außenwand auf der von der Blattspitze abgewandten Seite des Auffangelements ein Handloch derart angeordnet, daß durch das Handloch eine manuelle Reinigung des Auffangelements erfolgen kann. Hierdurch wird sichergestellt, daß auch bei einem längeren Betrieb es nicht zu einem Zusetzen des Auffangelements kommt und dieses ohne großen Aufwand gereinigt werden kann. Das Handloch ist bevorzugt durch eine Tür oder einen Deckel verschließbar, so daß durch Öffnen des Deckels ohne weiteren Aufwand auf das Auffangelement zugegriffen werden kann, um dieses zu reinigen.

Das Auffangelement kann aus elektrisch nicht leitendem Material hergestellt sein, wobei hier bevorzugt eine glasfaserverstärkter Kunststoffplatte mit feinen Bohrungen verwendet wird. Die feinen Bohrungen besitzen einen Durchmesser kleiner als der der Entwässerungsbohrung. Alternativ ist auch möglich, das Auffangelement aus elektrisch leitendem Material herzustellen, wobei dann das Auffangelement mit einem Blitzableitungssystem in dem Rotorblatt verbunden ist.

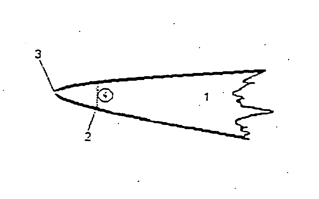

Eine bevorzugte Ausführungsform der erfindungsgemäßen Rotorblattgestaltung wird anhand der einzigen Figur näher erläutert. Die Figur zeigt einen Querschnitt durch die Spitze eines Rotorblatts. Das Rotorblatt ist im Bereich der Spitze hohl ausgebildet, wobei etwaige Verstärkungsstreben zur besseren Übersicht nicht dargestellt sind. In der Blattspitze befindet sich eine Entwässerungsbohrung 3, durch die Wasser aus dem Rotorblatt austreten kann. Im Betrieb der Windenergieanlage wird das Wasser durch die Zentrifugalkraft zu der Entwässerungsbohrung 3 hin gefördert. Die Entwässerungsbohrung kann einen Durchmesser von weniger als einem Zentimeter besitzen, vorzugsweise von ungefähr 5 mm. Es ist möglich, eine Entwässerungsbohrung mit einem kreisrunden oder einem im wesentlichen ovalen Querschnitt auszubilden. Auch ist es möglich, mehrere kleine Entwässerungsbohrungen vorzusehen..

Beabstandet von der Entwässerungsbohrung 3 ist ein Netz 2 in dem Hohlraum angebracht, das den Hohlraum im Querschnitt überdeckt. Das Auffangelement kann in einer möglichen Ausgestaltung lösbar mit Haltemitteln in dem Hohlraum eingespannt sein, so daß bei einer Beschädigung und/oder zum Reinigen des Auffangelements dieses leicht ausgetauscht werden kann

Nabenseitig von dem Netz ist an der Außenseite des Rotorblatts ein Handloch 4 vorgesehen, durch das eine Person in den Hohlraum greifen kann. Bei Wartungsarbeiten können entweder die auf dem Netz gesammelten Rückstände eingesammelt werden oder das Netz aus dem Hohlraum entfernt werden, um dieses außerhalb des Rotorblatts zu reinigen.

Das Handloch ist durch einen Deckel oder eine Tür verschließbar, wobei die Tür nach Möglichkeit bündig mit der Außenwand des Rotorblatts abschließt, um zusätzliche Windgeräusche zu vermeiden. Der Handlochdeckel wird beispielsweise über Flachkopfschrauben verschraubt und nachfolgend mit Dichtmasse eben mit der Außenwand des Rotorblatts abgedichtet.

## Patentansprüche

1. Rotorblatt für eine Windenergieanlage, das mindestens einen Hohlraum aufweist, der an einer Außenwand des Rotorblatts angrenzt und über mindestens eine Entwässerungsbohrung (3) mit der Außenseite verbunden ist, **dadurch gekennzeichnet, daß** in dem Hohlraum ein wasserdurchlässiges Auffangelement (2), das Schmutzpartikel und Kleinteile auffängt, derart angeordnet ist, daß Wasser aus dem Hohlraum durch das Auffangelement (2) zu der Entwässerungsbohrung (3) gelangt.

2. Rotorblatt nach Anspruch 1, **dadurch gekennzeichnet, daß** ein Netz, ein Sieb und/oder ein Gitter als Auffangelement in dem Hohlraum angeordnet ist.

3. Rotorblatt nach Anspruch 1 oder 2, **dadurch gekennzeichnet, daß** die Entwässerungsbohrung im Bereich der Blattspitze des Rotorblatts vorgesehen ist.

4. Rotorblatt nach Anspruch 3, **dadurch gekennzeichnet, daß** die Entwässerungsbohrung an dem freien Ende der Rotorblattspitze angeordnet ist.

5. Rotorblatt nach einem der Ansprüche 1 bis 4, **dadurch gekennzeichnet, daß** das Auffangelement im wesentlichen flach ausgebildet und quer zur Blattlängsrichtung in dem Hohlraum angeordnet ist.

6. Rotorblatt nach Anspruch 5, **dadurch gekennzeichnet, daß** das Auffangelement den Hohlraum im gesamten Querschnitt bedeckt.

7. Rotorblatt nach einem der Ansprüche 1 bis 6, **dadurch gekennzeichnet, daß** in der Außenwand auf der von der Rotorblattspitze abgewandten Seite des Auffangelements ein Handloch (4) derart angeordnet ist, dass durch das Handloch eine manuelle Reinigung des Auffangelements erfolgen kann.

8. Rotorblatt nach Anspruch 7, **dadurch gekennzeichnet, daß** eine Tür oder ein Deckel zum Verschließen des Handlochs vorgesehen ist.

9. Rotorblatt nach einem d er Ansprüche 1 bis 8, **dadurch gekennzeichnet, daß** das Auffangelement aus elektrisch nicht leitendem Material hergestellt ist.

10. Rotorblatt nach Anspruch 9, **dadurch gekennzeichnet, daß** das Auffangelement aus glasfaserverstärktem Kunststoff besteht.

11. Rotorblatt nach einem der Ansprüche 1 bis 8, **dadurch gekennzeichnet, daß** das Auffangelement aus elektrisch leitendem Material hergestellt ist.

12. Rotorblatt nach Anspruch 11, **dadurch gekennzeichnet, daß** das Auffangelement mit einem Blitzableitungssystem in dem Rotorblatt verbunden ist.

## Claims

1. A rotor blade for a wind turbine that has at least one cavity, which borders on an outer wall of the rotor blade and is connected to the exterior by means of at least one drainage hole (3), **characterized in that** a water-permeable collecting element (2), which collects dirt particles and small particles, is disposed in the cavity so that water from the cavity passes through the collecting element (2) to the drainage hole (3).

2. The rotor blade according to claim 1, **characterized in that** a netting, a screen and/or a grating is disposed as a collecting element in the cavity.

3. The rotor blade according to claim 1 or 2, **characterized in that** the drainage hole is provided in the area of the blade tip of the rotor blade.

4. The rotor blade according to claim 3, **characterized in that** the drainage hole is disposed at the free end of the rotor blade tip.

5. The rotor blade according to one of the claims 1 to 4, **characterized in that** the collecting element is formed substantially flat, and is disposed in the cavity transverse to the longitudinal direction of the blade.

6. The rotor blade according to claim 5, **characterized in that** the collecting element covers the cavity in its entire cross-section.

7. The rotor blade according to one of the claims 1 to 6, **characterized in that** a hand hole (4) is disposed in the outer wall on the side of the collecting element facing away from the rotor blade tip, so that a manual cleaning of the collecting element can occur through the hand hole.

8. The rotor blade according to claim 7, **characterized in that** a door or a cover is provided for closing the hand hole.

9. The rotor blade according to one of the claims 1 to 8, **characterized in that** the collecting element is produced from electrically non-conductive material.

10. The rotor blade according to claim 9, **characterized in that** the collecting element is composed of glass fiber reinforced plastic.

11. The rotor blade according to one of the claims 1 to 8, **characterized in that** the collecting element is produced from electrically conducting material.

12. The rotor blade according to claim 11, **characterized in that** the collecting element is connected to a lighting conductor system in the rotor blade.

## Revendications

1. Pale pour éolienne, qui présente au moins une cavité qui jouxte une paroi extérieure de la pale et est raccordée au côté extérieur par le biais d'au moins un alésage de drainage (3), **caractérisée en ce que**, dans la cavité, il est disposé un élément collecteur (2) perméable à l'eau qui collecte des particules d'impuretés et des petites parties de sorte que l'eau sortant de la cavité parvient à l'alésage de drainage (3) à travers l'élément collecteur (2).

2. Pale pour éolienne selon la revendication 1, **caractérisée en ce qu'**un filet, un tamis et/ou une grille est disposé(e) dans la cavité en tant qu'élément collecteur.

3. Pale pour éolienne selon la revendication 1 ou la revendication 2, **caractérisée en ce que** l'alésage de drainage est prévu dans la zone de la pointe de pale de la pale.

4. Pale pour éolienne selon la revendication 3, **caractérisée en ce que** l'alésage de drainage est disposé à l'extrémité libre de la pointe de pale.

5. Pale pour éolienne selon une des revendications 1 à 4, **caractérisée en ce que** l'élément collecteur est constitué essentiellement de façon plate et est disposé transversalement à la direction longitudinale de pale dans la cavité.

6. Pale pour éolienne selon la revendication 5, **caractérisée en ce que** l'élément collecteur couvre la cavité sur toute la section transversale.

7. Pale pour éolienne selon une des revendications 1 à 6, **caractérisée en ce que**, dans la paroi extérieure, sur le côté de l'élément collecteur éloigné de la pointe de pale, il est disposé un trou de poing (4) de sorte qu'un nettoyage manuel de l'élément collecteur puisse s'effectuer à travers le trou de poing.

8. Pale pour éolienne selon la revendication 7, **caractérisée en ce qu'**une porte ou un couvercle est prévu(e) pour la fermeture du trou de poing.

9. Pale pour éolienne selon une des revendications 1 à 8, **caractérisée en ce que** l'élément collecteur est fabriqué à partir d'un matériau électriquement non conducteur.

10. Pale pour éolienne selon la revendication 9, **caractérisée en ce que** l'élément collecteur est composé de matière plastique renforcée de fibres de verre.

11. Pale pour éolienne selon une des revendications 1 à 8, **caractérisée en ce que** l'élément collecteur est fabriqué à partir d'un matériau électriquement conducteur.

12. Pale pour éolienne selon la revendication 11, **caractérisée en ce que** l'élément collecteur est raccordé à un système parafoudre dans la pale.
